# EUROPÄISCHE PATENTSCHRIFT

(11) **EP 0 612 605 B1**
(45) Veröffentlichungstag und Bekanntmachung des Hinweises auf die Patenterteilung: **06.08.1997**
(21) Anmeldenummer: 94101747.7
(22) Anmeldetag: 05.02.1994
(51) Int. Cl.: B29C 49/42, B29C 31/08

(54) **Blasmaschine**
Blow moulding machine
Machine de moulage par soufflage

(30) Priorität: 25.02.1993 DE 4305735
(43) Veröffentlichungstag der Anmeldung: 31.08.1994
(73) Patentinhaber: GEIGER TECHNIK GmbH, D-82467 Garmisch-Partenkirchen (DE)
(72) Erfinder: Geiger, Albert, D-82467 Garmisch-Partenkirchen (DE)
(74) Vertreter: Flosdorff, Jürgen, Dr.

(56) Entgegenhaltungen:
- EP-A- 0 248 306
- DE-A- 3 737 453
- US-A- 4 239 474
- US-A- 5 030 083
- KUNSTSTOFFE Bd. 78, Nr. 12 , Dezember 1988 , MüNCHEN DE Seite 1160 XP000029244 'Automatisierte BMC-Verarbeitungsanlage'

## Beschreibung

Die Herstellung von Hohlkörpern aus Kunststoffen im Blasverfahren läuft in der Regel in der Weise ab, daß das in einem Extruder durch Einwirkung von Druck und Wärme erweichte Ausgangsmaterial in einem dem Extruder nachgeschalteten sogenannten "Blaskopf" oder "Schlauchkopf" in einen rohr- oder schlauchförmigen Strang umgeformt und senkrecht nach unten aus der Düse des Blaskopfes ausgepreßt wird, aus dem Abschnitte als Vorformlinge einzeln in das Formnest einer geteilten und geöffneten Blasform eingebracht werden, die nach dem Schließen der Blasform durch Einführen eines Blasmediums mittels eines Blasdornes oder einer Blasnadel bis zur Anlage gegen die Formnestwand zu Hohlkörpern gewünschter Gestalt aufgeweitet werden. Die Blasformteile, meist Blasformhälften, sind an Formtrag- oder Schließplatten auswechselbar montiert, die, auf Holmen geführt, gegeneinander zum Öffnen und Schließen der Blasform meist hydraulisch verschiebbar sind. Die aus den Formtragplatten, den Führungsholmen, den Formteilen und dem Bewegungsmechanismus bestehende Einheit wird "Schließgestell" genannt. Bei den meisten dieser Maschinen steht der Extruder mit dem Blaskopf still, während das gesamte Schließgestell zwischen dem Blaskopf und der aus dem Blasdorn oder Blasnadel und dem Bewegungsmechanismus für diese bestehenden Blaseinheit hin- und hergefahren werden kann, d.h. die leere geöffnete Form für die Aufnahme eines Vorformlings zum Blaskopf hingefahren und danach geschlossen mit einem im Formnest der Blasform gelagerten Vorformling zurück in die sogenannte "Blasstation" zurückgefahren werden kann.

Mit einer derartigen Blasmaschine lassen sich in der Regel zwar nicht nur rotationssymmetrische aber doch nur solche Körper herstellen, die nur eine Hauptachse haben, z.B. Flaschen, Flacons, Kanister, Weithalsgefäße (ähnlich Marmeladengläsern), sowie sog. "technische Teile", mit einer Hauptachse, wie z.B. im Kraftfahrzeugbau Tanks, Behälter für die Front- und Heckscheibenreinigungsflüssigkeit, Bremsölbehälter, Armlehnen u. dgl.. Abweichende Formen, z.B. Flaschen mit Griff, Gießkannen u. dgl., lassen sich dann mit dem vorbeschriebenen Verfahren herstellen, wenn sich die Bereiche, die zwischen dem Hauptkörper und dem angeformten Teil liegen, also z.B. bei einer Gießkanne der Bereich im Inneren des Griffs und bei der Tülle der Bereich zwischen dem Hauptkörper und dieser Tülle "überquetschen" lassen. Darunter versteht man die Möglichkeit, diese Bereiche des schlauchförmigen Vorformlings in der Blasform so beim Formschluß zusammenzuquetschen, daß sie nach der Entnahme des hinreichend abgekühlten Hohlkörpers aus der Form leicht entfernt werden können.

Als die Kunststoffblastechnik sich neben der Herstellung von Hohlkörpern hauptsächlich für die Verpackung bzw. für die Aufnahme von Flüssigkeiten und Schüttgütern, d.h. von Flaschen aller Art, Tablettenröhrchen, Kannen, Kanistern u. dgl., auch der Herstellung technischer Teile zuwandte, entstand mehr und mehr auch das Bedürfnis, Hohlkörper mit mehreren im Winkel und im Raum zueinander stehenden Achsen erzeugen zu können, wofür als einfachstes aber trotzdem mit den beschriebenen Maschinen je nach Form und Größe nur schwer oder gar nicht herzustellendes Beispiel ein- und mehrfach gekrümmte Rohrstücke genannt seien.

Dabei besteht die Schwierigkeit im wesentlichen nicht im Aufweiten des in der Form befindlichen Vorformlings, sondern in der Einführung desselben in die Blasform. Es ist dann nämlich nicht mehr möglich, mit dem Blaskopf nur ein Schlauchstück genügender Länge senkrecht nach unten auszupressen, dieses am Nachschub noch hängende Schlauchstück zwischen die geöffnete mit vertikaler Trennebene stehende Blasform zu bringen, danach die Form zu schließen und durch den Formschluß oder danach den in der geschlossenen Form befindlichen Vorformling vom Nachschub zu trennen. Bei der Herstellung von Hohlkörpern mit mehreren Achsen muß vielmehr der Vorformling in das entsprechend mehrachsige Teil-Formnest eines Blasformteils eingelegt werden und hierzu dieses Blasformteil waagerecht oder schräg liegen. Weil das dem herzustellenden Hohlkörper entsprechende Formnest mehr als eine Achse hat und diese Achsen im Winkel zueinander im Raum liegen, d.h. das Formnest aus mehreren, nach beiden Seiten auf und ab verlaufenden Abschnitten bestehen kann, muß entweder der waagerecht oder schräg liegende Formteil während des geradlinigen Ausstoßes eines Vorformlings entsprechend hin- und her- sowie auf- und abgefahren werden oder bei stillstehender Form diese Bewegungen vom Extruder vorgenommen werden. Da nach dem Stande der Technik hierzu das gesamte Schließgestell oder der Extruder mit Blaskopf in drei zueinander senkrechten Achsen bewegt wird, müssen selbst bei nicht großen herzustellenden Gegenständen erhebliche Massen bewegt werden, da sowohl die Schließgestelle als auch die Extruder, selbst bei kleinen Maschinen, Tonnen wiegen. Ein Beispiel für diesen Stand der Technik ist die US-PS 4 239 474. Bei der Blasmaschine nach dieser Schrift ist die Form mit waagerechter Trennebene angeordnet und kann in ihrem Schließgestell neben dem Öffnen und Schließen als Ganzes nur in der Z-Achse bewegt, d.h. gehoben und abgesenkt werden. Die Bewegungen in der X- und Y-Achse werden durch Verschiebungen des Extruders mit angeschlossenem Blaskopf besorgt. Bei einer abgewandelten Ausführungsform wird die Bewegung in der Z-Achse nicht durch Heben und Senken des Schließgestells, sondern durch senkrechte Verschiebung des Blaskopfes gegenüber dem Extruder vollzogen. Während bei der erstgenannten Ausführung die waagerecht geteilte Form aufklappbar ist und damit die waagerecht liegende untere Formhälfte nach dem Abklappen der Oberhälfte für den Extruder zugänglich wird, wird bei der zweitgenannten Ausführungsform die untere waagerecht liegende Formhälfte auf gerader oder gekrümmter Bahn aus dem Bereich der senkrecht über ihr liegenden Formoberhälfte herausgefahren, um so dem bewegten Extruder mit Blaskopf zugänglich zu werden. Diese Vorrichtung hat den grundsätzlichen Nachteil, daß ein plastisch verformbarer, für das nachfolgende Aufblasen zum Hohlkörper geeigneter, waagerecht aus der Blaskopfdüse austretender schlauchförmiger Vorformling aus Kunststoff immer schwieriger als ein senkrecht nach unten aus der Düse des Blaskopfes ausgepreßter Schlauch zu handhaben und in ein Formnest einzuführen ist, eine Schwierigkeit, die bei Formnestern für mehrachsige Hohlkörper nur vergrößert werden kann. Bei einer Ausführung, bei der die unten waagerecht liegende Blasformhälfte auf einer gekrümmten Bahn, in der Regel einer Kreisbahn, bewegt und in einer Station gefüllt und in einer weiteren Station geschlossen wird, ist nachteilig, daß die Zeit, bis die obere Formhälfte auf die untere gebracht und damit die Form geschlossen wird, verhältnismäßig lang ist. Der Vorformling bleibt sozusagen in der unteren Formhälfte liegen und kühlt an der Berührungsfläche mit dem Formnest mit zeitlicher Abhängigkeit ab, wodurch Probleme beim anschliessenden Aufblasen eintreten können. Dabei ist zu beachten, daß die Formhälften bei allen Blasmaschinen für das schnelle Erkalten des fertig geblasenen Teils immer durch innere Kühlkanäle gekühlt werden und deshalf immer, auch auf ihrem Weg von einer zur folgenden Station, verhältnismäßig kühl bleiben.

Das wurde als so erheblicher Nachteil empfunden daß teilweise vorgezogen wurde, mehrachsige Hohlkörper nicht mit einer derart aufwendigen Vorrichtung, sondern nach der davor am Beispiel der Herstellung von Gießkannen beschriebenen Methode mit Überquetschungen herzustellen, sofern der Achsenverlauf dieser Gegenstände nicht zu kompliziert war. Es versteht sich aber, daß dabei in jedem Fall unverhältnismäßig große Überquetschungsflächen mit einem Materialanteil entstehen, der im Verhältnis zu dem Materialanteil des fertigen Hohlkörpers sehr groß ist und nach der Entnahme aus der Form und Erkalten abgetrennt werden muß, was natürlich auch ein großer Nachteil ist.

Der Erfindung lag demnach die Aufgabe zugrunde, eine einfach aufgebaute Blasmaschine zu schaffen, bei der weder die Blasform noch der Extruder für die Aufnahme des Vorformlings in waagerechter Ebene in mehreren Richtungen verfahren und in senkrechter Ebene angehoben oder abgesenkt werden müssen. Diese Aufgabe löst die Erfindung mit den im Anspruch 1 angegebenen Mitteln. Zweckmäßige weitere Ausgestaltungen der Erfindung definieren die Unteransprüche.

Die Erfindung ist an einem keinen Anspruch auf Vollständigkeit erhebenden Ausführungsbeispiel in den Zeichnungen dargestellt und anhand desselben nachfolgend beschrieben. Es stellen in jeweils parallelperspektivischer Ansicht dar:
- Fig. 1: die für die Erfindung wichtigen Teile einer Maschine nach der Erfindung in einer Anfangsphase der Aufnahme eines schlauchförmigen Vorformlings,
- Fig. 2: die Teile nach Fig. 1 in der Endphase der Aufnahme des Vorformlings,
- Fig. 2a: ein Vorschubdiagramm der Einheit der Fig. 1 und 2,
- Fig. 3: die Maschine nach der Erfindung während der Überführung eines Vorformlings von der Vorformlingsaufnahmestellung in die Blasstellung,
- Fig. 4: die Maschine nach den Fig. 1 bis 3 nachdem der Vorformling in der Blasstation in das Formnest einer Blasformhälfte abgeworfen wurde,
- Fig. 5: eine Blasformeinheit mit einem in das Teil-Formnest eines Formteils eingelegten Vorformling kurz vor dem Formschluß,
- Fig. 6: einen aus einem Vorformling nach den Fig. 1 bis 5 hergestellten mehrachsigen Hohlkörper.

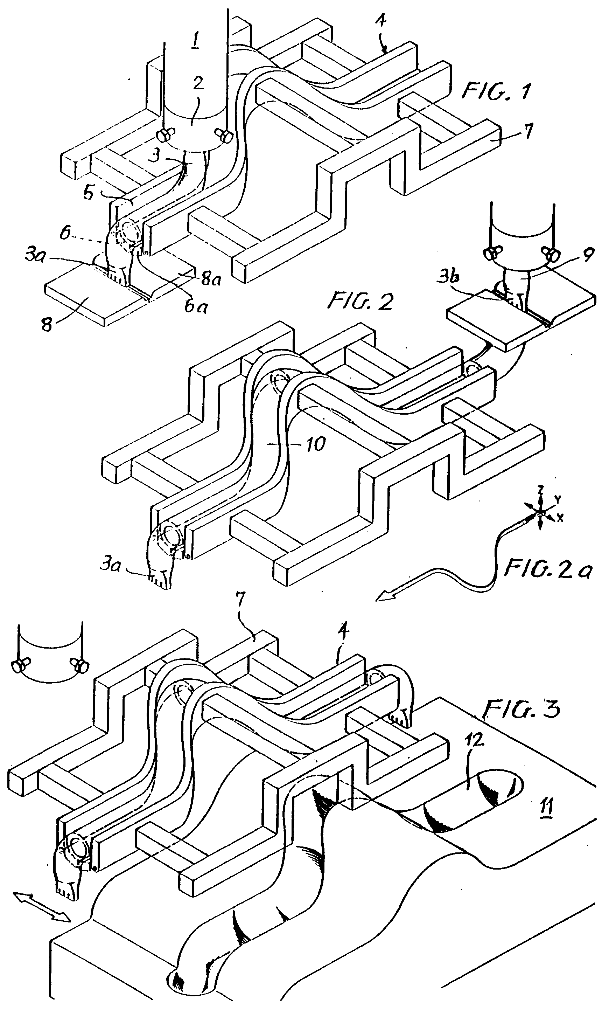

In Fig. 1 ist 1 ein einem Extruder nachgeschalteter Blaskopf, aus dessen im Düsenring 2 befindlichen Düse ein warmplastisch verformbarer Schlauch 3 kontinuierlich nach unten ausgespritzt wird.

Mit 4 ist eine Vorform bezeichnet, deren Formmulde 5 der Gestalt des herzustellenden Hohlkörpers weitgehend oder angenähert, insbesondere hinsichtlich des Achsenverlaufs entspricht. Den unteren Abschluß der Formmulde 5 und damit die Auflage für das ausgepreßte Schlauchstück bildet eine Einrichtung, die gesteuert im richtigen Augenblick den Vorformling aus der Mulde 5 freigibt. Bei dem dargestellten Beispiel sind dies zwei schwenkbare Bodenklappen 6 und 6a.

Die Vorform 4 mit Formmulde 5 soll aus einem Material bestehen, das der noch heiße Vorformling nicht angreift, aber sie muß nicht aus einem so hochwertigen Material gefertigt sein, wie die Blasformteile und braucht nicht deren Dimensionen aufzuweisen, da an ihr keine Schließkräfte angreifen und in ihr keine Kühlkanäle untergebracht sind.

Die Vorform 4 ist erfindungsgemäß auf einem einfachen und insbesondere leichten, in der Zeichnung nur schematisch angedeuteten Gestell, z.B. einem aus dünnen Vierkantrohren bestehenden Gestell 7 montiert, das auf nicht dargestellten Rollen oder Rädern auf nicht dargestellten Schienen mit einfachen, gering dimensionierten Motoren, z.B. einfachen Stellmotoren, für die Schlauchaufnahme und die Bewegung zwischen der Schlauchaufnahme und der Blasform bewegt werden kann.

In Fig. 1 erkennt man auch, wie das untere Ende 3a des Schlauches 3 zwischen zwei in waagerechter Ebene verschiebbaren Quetschplatten 8, 8a zusammengequetscht und damit geschlossen wurde. Außerdem zeigt die Darstellung der Fig. 1 eine Position, in der die Vorform 4 mit ihrem Trag- und Fahrgestell 7 bereits ein Stück in der Y-Achse verfahren wurde und somit ein Anfangsschlauchstück in den ersten Ast der Formmulde 5 eingelegt wurde.

Das Ende des Einlegevorgangs unter dem Blaskopf 1,2 zeigt Fig. 2. Hierzu hat sich das Trag- und Fahrgestell 7 sowohl in Y-Richtung under dem Blaskopf 1 hindurchbewegt, als auch vor und zurück in der X-Achse und, wenn es erforderlich für die Form des Vorformlings ist, schließlich auch aufwärts und abwärts in der Z-Achse, was wegen des geringen Gewichts der Vorform und ihres Traggestells 7 mit geringstem Energieaufwand zu bewerkstelligen ist. Die Bewegungen der Vorform 4 bzw. des Trag- und Fahrgestells 7 gemäß Fig. 2 in der X-, Y- und Z-Achse veranschaulicht das Diagramm nach Fig. 2a.

Während das Schlauchstück 3 aus der Düse im Düsenring 2 des Blaskopfes 1 ausgestoßen und in die unter dem Blaskopf 1 hin- und her- sowie auf- und abwärts gefahrene Formmulde 5 der Vorform 4 eingelegt wird, wird in das Schlauchstück durch die Düse im Blaskopf sogenannte "Stützluft" eingelassen, die dafür sorgt, daß das Schlauchstück nach dem Zusammenquetschen seines oberen Endes 3b durch die Quetschplatten 8, 8a in der Mulde 5 nicht zusammenfallen kann. Durch das Zusammenquetschen am Ende 3b entsteht durch Trennen vom Nachschub 9 der Vorformling 10.

Es ist an dieser Stelle darauf hinzuweisen, daß nur aus Platzgründen die Fig. 1 bis 3 in den Zeichnungen so gegeneinander verschoben werden mußten, daß jeweils die Darstellungen des Blaskopfes 1 mit Düsenring 2 nicht in einer Senkrechten untereinander liegen. Tatsächlich stehen Extruder mit Blaskopf 1 still, und die Vorform 4 mit Formmulde 5 wird auf dem Gestell 7 verschoben.

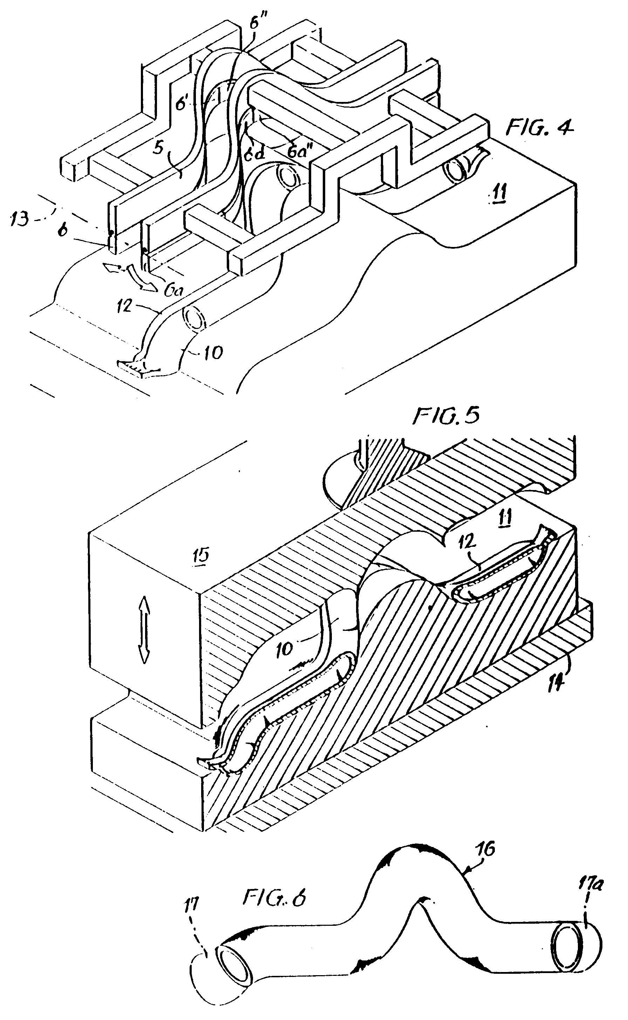

Nach der Darstellung der Fig. 3 wird nun die Vorform 4 auf ihrem Gestell 7 mit dem in der Mulde 5 liegenden Vorformling 10 in der X-Achse aus der Position unter dem Blaskopf 1 in die Blasstation über den unteren Teil 11 der Blasform mit Formnest 12 so weit gefahren, bis die Vorform 4 genau über dem Formnest 12 liegt. Diese Position ist in Fig. 4 dargestellt. In dieser Stellung werden die Bodenklappen 6,6a der Formmulde 5 in Pfeilrichtung auseinandergeschwenkt, wodurch der Vorformling 10 freigegeben wird und in das Formnest 12 des Formteils 11 fallen kann. Da die Vorformmulde 5 hinsichtlich der Form des herzustellenden Hohlkörpers und damit seiner verschiedenen Achsen, d.h. der Krümmung nach links und rechts sowie oben und unten bereits angepaßt ist, ist auch der schlauchförmige Vorformling 10 dieser Form bereits angepaßt, die er trotz seiner noch warmplastischen Verformbarkeit auf dem kurzen in der Z-Achse liegenden Weg zwischen Formmulde 5 der Vorform 4 und Formest 12 des Blasformteils 11 nicht verliert.

Fig. 4 veranschaulicht auch, daß die Bodenklappen über die Länge der Form in Anpassungen an die Krümmung der Vorform aus Segmenten 6-6a, 6'-6a', 6''-6a'' ... bestehen müssen. Je nach der Gestalt und Größe des Vorformlings 10 und damit der Vorvorm 4 können die Klappen 6, 6a gleichzeitig oder kurz nacheinander geöffnet werden.

Anstelle der Bodenklappen 6,6a... können auch andere Freigabeelemente für den Vorformling vorgesehen sein, z.B. ein - nicht dargestelltes - in der Ebene 13 die Formmulde 5 unten abschließendes Blech, das in der Position der Fig. 4 seitlich in dieser Ebene zur Freigabe des Vorformlings weggezogen und danach wieder zurückgeschoben werden kann. Ebenso kann selbstverständlich in vielen Fällen eine, gegebenenfalls entsprechend dem Muldenverlauf in Segmente unterteilte durchgehende Klappe 6 anstatt zweier Halbklappen 6,6a Verwendung finden. Die Bodenklappen bezw. deren Segmente 6-6a, 6'-a', 6''-6a'' usw. können auch aus in Form eines Rechens angeordneten Zähnen oder Stiften bestehen, wobei die Zähne oder Stifte der einen Klappe, z.B. der Klappe 6, auf Lücken zu denen der gegenüberliegenden Klappe 6a liegen, so daß sie im geschlossenen Zustand ineinander greifend einen geschlossenen Boden bilden. Nach einer Weiterbildung dieses Gedankens können die Stifte oder Zähne auch an einer sich über die ganze Länge der Vorform erstreckenden und den Achsabweichungen folgenden, drehbaren Element befestigt sein, wie es jedem Fachmann ohne weiteres zur Verfügung steht.

Fig. 5 zeigt den in dem auf der Formtragplatte 14 montierten unteren Formteil 11 liegenden Vorformling 10 kurz vor dem Schließen der Form mittels des oberen Formteils 15. Nach dem Formschluß wird in bekannter Weise durch eine Blasnadel das Blasmedium, meist Luft, in den Vorformling eingeführt, die ihn gegen die Wandung des Formnestes drückt und dadurch den in Fig. 6 dargestellten Hohlkörper 16 gewünschter Gestalt so weit ausformt, daß er danach der Form entnommen, von den Abfallendteilen 3a und 3b befreit und durch Abtrennen, z.B. Abkanten oder -sägen der Endkuppen 17, 17a, das fertige gekrümmte Rohr ergibt.

## Patentansprüche

1. Blasmaschine zur Herstellung von mehrachsigen Hohlkörpern aus Kunststoff, z.B. ein- oder mehrfach gekrümmten Rohrstücken mit einem einen warmplastisch verformbaren Schlauch erzeugenden, einem Extruder nachgeschalteten Blaskopf (1) und einer in einem Schließgestell montierten, geteilten Blasform mit Formnest (12), in das ein abgelängtes Schlauchstück (3) als Vorformling (10) eingebracht und nach dem Schließen der Blasform zu einem Hohlkörper (16) aufgeblasen wird,
**dadurch gekennzeichnet**, daß eine zwischen dem Blaskopf (1) und der eine Blasform (11, 15) mit waagerechter Trennebene aufweisenden Blasstation bewegbare, in der Gestalt dem Formnest (12) der Blasform angepaßte Vorform (4) mit einer blaskopfseitig offenen Formmulde (5) vorgesehen ist, die mindestens in ihrer Schlauchaufnahmestellung unter dem Blaskopf (1) in zwei waagerechten Richtungen (X- und Y-Achse) verschiebbar ist, und die für die Freigabe des Vorformlings (10) über das Formnest (12) des unteren Blasformteils (11) bewegbar ist.

2. Blasmaschine nach Anspruch 1,
dadurch gekennzeichnet, daß die Vorform (4) in ihrer Schlauchaufnahmestellung in senkrechter Richtung heb- und senkbar ist.

3. Blasmaschine nach Anspruch 1 oder 2,
dadurch gekennzeichnet, daß die Vorform (4) auf einem in Leichtausführung konstruierten Gestell (7) montiert ist.

4. Blasform nach einem der Ansprüche 1 bis 3,
dadurch gekennzeichnet, daß der Boden der Vorform (4) aus wenigstens einer verschwenkbaren Bodenklappe (6, 6a) besteht.

5. Blasmaschine nach Anspruch 4,
dadurch gekennzeichnet, daß der Boden der Vorform (4) in Anpassung an den gekrümmten Verlauf der Formmulde (5) aus Klappensegmenten (6-6a, 6'-6a', 6''-6a''...6ⁿ-6aⁿ) zusammengesetzt ist.

6. Blasmaschine nach dem Anspruch 5,
dadurch gekennzeichnet, daß die Bodenklappen die Form von rechenartig angeordneten Schienen, Stiften u. dgl. aufweisen, die im geschlossenen Zustand, auf Lücke liegend, ineinandergreifen.

7. Blasmaschine nach einem der Ansprüche 1 bis 3,
dadurch gekennzeichnet, daß der Boden der Vorform (4) aus einem oder mehreren, seitlich in der X-Achse verschiebbaren Blech oder Blechen besteht.

8. Verfahren zum Herstellen von ein- oder mehrfach gekrümmten Hohlkörpern wie Rohrstücken, mit folgenden Schritten:
a) ein Schlauchkopf trägt einen warmplastisch verformbaren Schlauch aus,
b) eine Vorformlings-Transportvorrichtung wird in zwei waagerechten Richtungen (X- und Y-Achse) unter dem Schlauchkopf bewegt und nimmt den Schlauch in ihre Formmulde auf,
c) die Vorformlings-Transportvorrichtung wird in eine solche Position oberhalb des Formnestes einer Blasform bewegt, daß die Formmulde mit dem darauf befindlichen Schlauch vertikal über dem Formnest positioniert ist,
d) der Boden der Formmulde wird geöffnet, so daß der Schlauch in das Formnest fällt,
e) die Blasform wird geschlossen und der Schlauch durch Einführen eines Blasmediums gegen die Wandung des Formnestes gedrückt.

9. Verfahren nach Anspruch 8,
dadurch gekennzeichnet, daß die Vorformlings-Transportvorrichtung unter dem Schlauchkopf in senkrechter Richtung (Z-Achse) angehoben und abgesenkt wird.

## Claims

1. Blow moulding machine for producing multi-axis hollow bodies of a plastics material, e.g. tube pieces which are curved once or several times, with a blow head (1), which produces a hose capable of being plastically formed under heat and is disposed after an extruder, and a split blow mould, which is mounted in a rising table and has a mould cavity (12) into which a cut-to-length hose piece (3) is introduced as a parison (10), which piece is blown into a hollow body (16) following the closure of the blow mould, characterised in that a premould (4), which can move between the blow head (1) and the blowing station comprising a blow mould (11, 15) with a horizontal parting plane and the shape of which is adapted to that of the mould cavity (12) of the blow mould, is provided with a mould trough (5) which is open on the blow head side, can be displaced at least in its hose receiving position below the blow head (1) in two horizontal directions (X and Y axis) and can be moved into a position above the mould cavity (12) of the bottom mould part (11) to release the parison (10).

2. Blow moulding machine according to claim 1, characterised in that the premould (4) can be raised and lowered in the vertical direction in its hose receiving position.

3. Blow moulding machine according to claim 1 or 2, characterised in that the premould (4) is mounted on a frame (7) of lightweight construction.

4. Blow mould according to one of claims 1 to 3, characterised in that the bottom of the premould (4) consists of at least one pivotable bottom flap (6, 6a).

5. Blow moulding machine according to claim 4, characterised in that the bottom of the premould (4) is composed of flap segments (6-6a, 6'-6a', 6''-6a''...6ⁿ-6aⁿ) in conformity with the curved trend of the mould trough (5).

6. Blow moulding machine according to claim 5, characterised in that the bottom flaps are in the form of rails, pins, etc. which are arranged like a rake and which in the closed state, being staggered, intermesh.

7. Blow moulding machine according to one of claims 1 to 3, characterised in that the bottom of the premould (4) consists of one or more metal plate(s) which can be displaced laterally along the X axis.

8. Method for producing hollow bodies such as tube pieces which are curved once or several times, comprising the following steps:
a) an extruder head discharges a hose which can be plastically formed under heat,
b) a parison transport device is moved in two horizontal directions (X and Y axis) below the extruder head and receives the hose in its mould trough,
c) the parison transport device is moved into a position above the mould cavity of a blow mould such that the mould trough is positioned with the hose disposed thereon vertically above the mould cavity,
d) the bottom of the mould trough is opened so that the hose falls into the mould cavity,
e) the blow mould is closed and the hose is forced against the wall of the mould cavity by introducing a blow medium.

9. Method according to claim 8, characterised in that the parison transport device is raised and lowered in the vertical direction (Z axis) below the extruder head.

## Revendications

1. Machine de moulage par soufflage pour la fabrication de corps creux à plusieurs axes , en matière plastique, par exemple des morceaux de tuyaux recourbés une ou plusieurs fois, avec une tête de soufflage (1) placée à la suite d'une extrudeuse et produisant un tuyau souple thermoplastiquement déformable et, monté dans un châssis de fermeture, un moule de soufflage divisé ayant une empreinte (12) dans laquelle est mis en place un morceau de tuyau allongé (3) en tant qu'ébauche (10) et qui, après la fermeture du moule de soufflage, est gonflé en un corps creux (16),
caractérisée en ce qu'il est prévu un prémoule (4), mobile entre la tête de soufflage (1) et le poste de moulage par soufflage comportant un moule de soufflage (11, 15) ayant un plan de séparation horizontal, prémoule adapté à la conformation de l'empreinte (12) du moule de soufflage, et ayant une auge de moule (5) ouverte du côté de la tête de soufflage, auge qui au moins dans sa position de réception du tuyau est mobile sous la tête de soufflage (1) dans deux directions horizontales (axe X et axe Y), et qui peut être déplacée, pour la libération de l'ébauche (10), au-dessus de l'empreinte (12) de la pièce de moule inférieure (11).

2. Machine de moulage par soufflage selon la revendication 1, caractérisée en ce que le prémoule (4) dans sa position de réception du tuyau peut être monté et descendu dans la direction verticale.

3. Machine de moulage par soufflage selon la revendication 1 ou 2, caractérisée en ce que le prémoule (4) est monté sur un châssis(7) construit selon une réalisation légère.

4. Machine de moulage par soufflage selon l'une des revendications 1 à 3, caractérisée en ce que le fond du prémoule (4) se compose d'au moins un volet de fond (6, 6a) pivotant.

5. Machine de moulage par soufflage selon la revendication 4, caractérisée en ce que le fond du prémoule (4), en adaptation avec le tracé curviligne de l'auge de moule (5), est composé de segments de volets (6-6a, 6'-6a', 6''-6a''...6ⁿ-6aⁿ).

6. Machine de moulage par soufflage selon la revendication 5, caractérisée en ce que les volets de fond présentent la forme de baguettes, de broches et similaires disposées en une sorte de râteau, lesquelles à l'état fermé s'engrènent les unes dans les autres, en se plaçant dans des interstices.

7. Machine de moulage par soufflage selon l'une des revendications 1 à 3, caractérisée en ce que le fond du prémoule (4) se compose d'une ou plusieurs tôle(s) déplaçable(s) latéralement dans la direction de l'axe X.

8. Procédé de fabrication de corps creux recourbés une ou plusieurs fois, comme des morceaux de tuyau, comportant les étapes suivantes :
a) une tête à tuyau éjecte un tuyau déformable thermoplastiquement,
b) un dispositif de transport d'ébauche est déplacé dans deux directions horizontales (axe X et axe Y) sous la tête à tuyau et reçoit le tuyau dans son auge de moule,
c) le dispositif de transport d'ébauche est déplacé dans une position telle, au-dessus de l'empreinte d'un moule de soufflage, que l'auge de moule avec le tuyau s'y trouvant, est positionnée à la verticale au-dessus de l'empreinte,
d) le fond de l'auge de moule est ouvert de façon que le tuyau tombe dans l'empreinte,
e) le moule de soufflage est fermé et le tuyau est pressé contre la paroi de l'empreinte par introduction d'un milieu gazeux.

9. Procédé selon la revendication 8, caractérisé en ce que le dispositif de transport de l'ébauche est monté et descendu à la verticale (axe Z) sous la tête à tuyau.
